# EUROPEAN PATENT APPLICATION

(11) **EP 3 476 719 A1**
(43) Date of publication of application: **01.05.2019**
(21) Application number: 18197071.6
(22) Date of filing: 27.09.2018
(51) Int. Cl.: B64C 3/00, B64C 3/26, B64C 3/38, B64C 3/52, B64C 3/20

(54) **WING SEGMENT AND AIRCRAFT HAVING A WING SEGMENT**

(30) Priority: 26.10.2017 DE 102017125163
(71) Applicant: Airbus Operations GmbH, 21129 Hamburg (DE)
(72) Inventor: Krog, Lars, 21129 Hamburg (DE); Basso, Pasquale, 21129 Hamburg (DE)
(74) Representative: LKGLOBAL Lorenz & Kopf PartG mbB Patentanwälte

(57) **Abstract**

The invention relates to a wing segment (10) for an aircraft (100). The wing segment (10) comprises a first skin element (20) comprising a material having anisotropic material characteristics and a rib element (13) arranged between a leading edge (14) and a trailing edge (15) of the wing segment (10). The first skin element (20) is attached to the rib element (13) in such a way that a deformation of the skin element (13) results in a twist (40) of the wing segment (10) with respect to a main extension direction (12) of the wing segment (10). The wing segment (10) further comprises a control unit (30) for controlling a deformation of the skin element (13) in order to adjust the twist (40) of the wing segment (10) such that a predetermined twist (40) of the wing segment (10) is achievable.

## Description

### Field of the invention

The invention generally relates to aerodynamic structures of aircraft. In particular, the invention relates to a wing segment for an aircraft as well as to an aircraft comprising a wing segment.

### Background of the invention

Aircraft are usually designed in an aerodynamically efficient manner in order to balance requirements for minimum aircraft drag against requirements for optimum lift characteristics of the aircraft. Due to the changing flight conditions that an aircraft is subjected to during its operations, including for example during take-off, climb, cruise, descent and landing, it is generally required to design the aircraft in such a way that an aerodynamically optimized design is achieved which represents a compromise for the different flight conditions that the specific aircraft type encounters during its operation. Different approaches are being used to find a good compromise for an aircraft design that is efficient during every flight condition, i.e. that maximizes the overall efficiency of the aircraft considering the different flight conditions that the aircraft sees during its operation. As already mentioned, this includes considering specific requirements for take-off, climb, cruise flight, descend and landing, but also includes considering the different mission requirements for the aircraft in terms of both range and payload.

US 2017 247 105 A1 describes a wing for an aircraft, including a main wing and a wing tip device. A front blade and a rear blade of the wing tip device extend from an attachment end, a front blade leading edge extends in front of a rear blade leading edge and a front blade trailing edge extends in front of a rear blade trailing edge, in a chord direction, and at a front blade tip the front blade extends under a different dihedral angle than the rear blade at a rear blade tip. The front blade leading and trailing edges, as well as the rear blade leading and trailing edges have a tangent-continuous developing. The front blade leading edge extends tangent-continuously with the wing leading edge. The rear blade trailing edge extends tangent-continuously with the wing trailing edge. The front blade trailing edge extends behind the rear blade leading edge, in the chord direction.

### Summary of the invention

It is an object of the present invention to improve the aerodynamic performance of an aircraft.

This object is achieved by the subject-matter of the independent claims. Further exemplary embodiments are evident from the dependent claims and the following description.

According to a first aspect of the invention, a wing segment for an aircraft is provided. The wing segment may be a part of a wing, in particular a part of an aircraft wing. For example, an aircraft wing comprises a plurality of the inventive wing segments, wherein an outer appearance of the wing segments of one wing may vary. However, it is possible that the wing segment defines an entire aircraft wing. The wing segment comprises a first skin element which comprises a material having anisotropic material characteristics and a rib element arranged between a leading edge and a trailing edge of the wing segment. The first skin element is attached to the rib element in such a way that a deformation of the skin element results in a twist of the wing segment with respect to a main extension direction of the wing segment. It is possible that the main extension direction is an extension direction of a stringer element within the wing segment. The twist of the wing segment may occur around the main extension direction of the wing segment such that the angle of attack of the airfoil relative to the airstream along the main extension direction of the wing segment varies. The wing segment further comprises a control unit for controlling the deformation of the first skin element in order to adjust the twist of the wing segment such that a predetermined twist of the wing segment is achievable. In particular, the control unit controls the deformation of the first skin element in order to adjust the twist of the wing segment such that an optimum twist of the wing segment and hence an optimum angle of attack of the airfoil relative to the airstream is achievable.

The wing segment may be integrated into an aircraft wing in such a way that the wing segment is only a part or a region of an aircraft wing, or the wing segment may be an entire wing. One or several wing segments may then be integrated into an airplane wing, wherein the airplane may be a passenger aircraft. The wing segment may be a wing, a winglet or a horizontal or vertical tail plane of the aircraft or the wing segment may be a part of a wing, a part of a winglet or a part of a horizontal or vertical tail plane of the aircraft.

The control unit of the wing segment may actively or passively generate an additional force within the first skin element, which results in a specified deformation of the first skin element and adjusts the twist of the wing segment. For a passive control, the control unit may be or comprise a stiffening element or a stiffener. When the wing bends, the stiffening element generates an additional force within the first skin element, which affects its deformation and adjusts the twist of the wing segment. In this manner, a twist correction for a slightly unfavorable cruise shape of the wing segment can be compensated. For a passive control, the control unit may also comprise a pre-spanning element. This allows an independent control of forces within the first skin element and may be used to re-twist the wing segment on ground to compensate for a slightly unfavorable cruise shape and/or to re-twist the wing segment to optimize aero-dynamics for a specific mission requirement. For an active control, the control unit may also be or comprise an actuation unit or an actuator which, by controlling forces and deformations of the first skin element, allows for a continuous re-twist of the wing segment during flight.

Using such a wing segment provides for an independent control of the twist of the wing segment seen during flight. In particular, when the control unit is or comprises an actuation unit, specific loads may be applied during flight to the wing segment, or to the wing into which the wing segment is integrated, thereby providing for an independent control of the wing twist during flight.

The inventive wing segment applies the concept of combining the use of anisotropic material characteristics, to design a wing where the forces or stresses introduced within the wing segment lead to a desired deformation, e.g. twist, of the whole wing segment, with an independent mechanism which allows to control/adjust the desired magnitude of this deformation of the wing segment by passively or actively controlling the deformation of the wing segment.

The anisotropic material characteristics may be achieved, for example, by using unbalanced skin laminates, but may also be achieved using isotropic metallic skin sheets stiffened in a swept, i.e. angled, direction relative to the main extension direction of the wing segment. Stiffening a metallic skin in a direction which is angled with respect to the main extension direction of the wing segment, effectively provides both an anisotropic and an unbalanced skin laminate behavior.

The anisotropic material characteristics of the first skin element can be achieved by specific manufacturing processes for the material of the first skin elements. The anisotropic material of the skin element has a directional dependence of its physical stiffness properties. For example, the Young's modulus depends on the direction of load on the skin element. The anisotropic material characteristics of the skin element may for example be achieved by providing a first skin element made of a fiber-reinforced material. The fiber-reinforced material may be a fiber-reinforced plastic or a fiber-reinforced metal. For example, the fiber-reinforced material is a carbon fiber-reinforced plastic.

By specifically designing both the anisotropic material characteristics of the first skin element of the wing segment and the direction in which the control unit loads the first skin element, it is possible to design a wing segment where the forces, e.g. stresses, that are introduced into the wing skins by the control unit also lead to a specified deformation of the wing skins and a specified twist of the wing segment. This is possible, for example, by using composite skin laminates that exhibit an unbalanced laminate behavior in the loading direction of the control unit, or by using a metallic skin made of isotropic materials and stiffened and/or loaded in an angled direction with respect to the main extension direction of the wing segment. In both situations, the loading introduced into the skins by the control unit will create a shear deformation in the first skin element that via its connection to the ribs will twist the wing segment. In the case of metallic skin material, the control unit itself can also be used as stiffening element swept with respect to the main extension direction of the wing segment providing the skin material with the required anisotropic characteristics.

The control unit of the inventive wing segment is designed to specifically control and adjust the loading, for example chord-wise or transverse loading, in the skins in order to introduce an additional shear deformation in the skins that result in an additional wing twist. The control unit may be configured either as a passive or as an active system which changes the loads in the skins and delivers a desired wing twist. The terms "skin element" and "skin laminate" may be used as synonyms, at least as comparable elements in the context of the present invention.

The term "twist" in the context of the present invention may be understood as an aerodynamic feature added to aircraft wings along their span to adjust lift distribution along the wing and to control drag. Wing twist may be measured either relative to the main extension direction of the wing or relative to the airflow direction of the oncoming air. The inventive wing segment provides for a passive or active adjustment of the wing twist by controlling the magnitude or amount of twist introduced by the wing segment or at a specific location of the wing segment. The twist introduced by the inventive wing segment may, for example, be measured as a relative twist introduced between an in-board and an out-board section of the wing. The twist applied by the inventive segment typically leads to a changed twist along the wing via a change of the aero-dynamics and a change of global wing bending and twist.

The control unit may introduce an additional loading into the wing skins, i.e. into a first skin element and possibly also into a second skin element, as will be described in detail below. The additional loading introduced into the wing skins create additional shear deformation in the wing skins, which depending on the loading direction, i.e. tension or compression, may shear either forward or aft. The constrained motion of the top or bottom skins, i.e. the first and second skin elements, imposed by the rib elements and spars within the wing segment, generates a torsion moment responsible for twisting the wing segment.

In the case where the control unit is a simple stiffening element or stiffener, an additional tension or compressive load may be generated in the skin elements by the additional stiffener. The additional stiffener may introduce an additional load by constraining the expansion or contraction of the wing skins, for example orthogonal to the wings main extension direction, which normally occurs during wing bending. This may also be referred to as a constrained poisons ratio effect and may be considered as a passive control of wing twist by changing the bending and torsion coupling characteristics of the wing segment.

By integrating one or several inventive wing segments into a wing, the deflected shape of the wing may be adjusted to different flight conditions. In particular, by optimizing the magnitude of the force applied by the control unit or the magnitudes of the forces applied by several control units, the twist along the span of the wing or wing segment may be adapted such that the deflected shape of the wing is aerodynamically optimized for a specific flight condition or a specific range of flight conditions.

There may be several stringer elements, e.g. stringers, and several rib elements, e.g. wing ribs, as well as several spar elements, e.g. wing spars integrated into the wing segment. Therefore, the described features and characteristics of the stringer element, the rib element and the spar element also apply for a plurality of stringer elements, rib elements and spar elements integrated into the wing segment. Within the wing segment, the spar elements may extend substantially parallel to the stringer elements and the rib elements may extend substantially perpendicular to the stringer elements. Furthermore, the wing segment may comprise several skin elements being attached to the rib elements and the spar elements, wherein the skin elements together provide an aerodynamic surface of the wing segment. The first skin element of the wing segment may be attached to the stringer element and/or to the rib element as well as to the spar element. The rib element may further be attached to the stringer element.

The main extension direction may be defined as the main extension direction of the entire wing of the aircraft. In particular, the angle between the main extension direction of the wing segment and a longitudinal axis of an aircraft fuselage to which the wings are attached is defined as the sweep angle of the wings. The longitudinal direction of the aircraft fuselage is substantially parallel to the flight direction during cruise flight.

The rib element may extend substantially perpendicular to the main extension direction of the wing segment. However, the ribs may also extend in the flight direction. The stringer element may have a longitudinal shape and may extend through the entire wing segment in the main extension direction of the wing segment. However, a stringer element is not necessarily present within the wing segment, especially if the skin elements of the wing segment are designed as a sandwich construction. It is possible that at least a part of the wing segment is designed as a sandwich structure.

A front region of the wing segment may comprise the leading edge and a rear portion of the wing segment may comprise the trailing edge of the wing segment. The rib element extends between the leading edge and the trailing edge.

The control unit is configured for introducing an additional load, acting substantially in a chord-wise or transverse direction, into the first skin element and/or into the second skin element arranged opposite to the first skin element with respect to the wing segment. This substantially chord-wise or transverse load may be introduced by the control unit in addition to other flight loads already present within the first skin element or second skin element so that, via the unbalanced skin laminate properties, or via the metallic isotropic materials stiffened so as to provide the anisotropic properties, a differential shear deformation is established between the top and bottom skin elements with respect to the wing segment. The function of the ribs and the spars may be to keep the skin elements in place. The forces generated between the skins and the ribs and/or between the skins and the spars when restraining the shear deformation of the skin elements generate a torsion moment that may twist the wing.

The first skin element may have a curved surface or a curved contour. The curved surface may be defined by aerodynamic requirements of the wing segment. For example, the curvature of the skin elements is defined by the location of the wing segment with respect to the overall wing into which the wing segment is incorporated.

According to an embodiment of the invention, the first skin element comprises a material with a main fiber direction, wherein the stiffness of the first skin element in the main fiber direction is higher than the stiffness of the skin element in a direction different to the main fiber direction. Therefore, the main fiber direction may also be referred to as or actually is the main stiffness direction.

In case of metallic skin isotropic materials, the main fiber direction may be understood as the direction of the stiffening elements stiffening the metallic skin elements, or eventually as stiffening elements of the control unit itself, that provides the skin elements with anisotropic characteristics and is angled with respect to the main extension direction of the wing segment.

The first skin element may thus be manufactured of a fiber-reinforced material such that the overall skin element has anisotropic material characteristics, for example unbalanced skin properties. The skin element may comprise different layers, wherein each layer has another fiber direction. If a load is applied in the main fiber direction of the skin element, achieving a deformation, in particular an elongation of the skin element, requires more energy than if a load is applied in a direction other than the main fiber direction. The stiffness may be characterized by the tensile strength or the Young's modulus of the skin element.

According to another embodiment of the invention, the main fiber direction of the first skin element is angled with respect to the main extension direction of the wing segment, in particular of the stringer element, such that the angle between the main fiber direction of the first skin element and the main extension direction of the wing segment is between 0° and 90°. In particular, the angle between the main fiber direction of the first skin element and the main extension direction of the wing segment is different from 0° and different from 90°.

Additionally or alternatively, the main fiber direction of the first skin element is angled with respect to the main extension direction of the wing segment, in particular of the stringer element, such that the angle between the main fiber direction of the first skin element and the main extension direction of the wing segment is between 0° and -90°. Also in this case, the angle between the main fiber direction of the first skin element and the main extension direction of the wing segment is different from 0° and different from -90°. The main extension direction of the wing segment may be defined as the direction which is equal to a 0° direction.

Thus, a specific arrangement of the skin elements, in particular of the main fiber direction, as well as a specific arrangement of the control unit with respect to the main extension direction may result in a specific forces within the skin element such that a specific twist of the entire wing segment can be achieved. A specific twist of the wing segment may result in a specific twist of the overall aircraft wing which may comprise several of the wing segments arranged in juxtaposition.

According to another embodiment of the invention, the first skin element comprises a plurality of skin layers, each of the skin layers having a corresponding fiber direction.

The first skin element may therefore be considered as a stack of skin layers, wherein the different skin layers are arranged one on top of the other. The first skin element may thus be a laminate structure or a skin laminate. The fiber directions of each of the skin layers can be arranged in a specified manner such that the overall skin element has anisotropic material characteristics. It is possible that the skin element is attached to the rib element or to the stringer element in such a way that the angle between a fiber direction of a first layer and the main extension direction of the wing segment amounts to 45° and that the angle between a fiber direction of a second layer, which is arranged on top of the first layer, and the main extension direction of the wing segment amounts to -45°. Various combinations of arrangements of the layers, in particular of the fiber directions of the layers can be imagined. The term "fiber direction" may define the general arrangement, e.g. orientation, of the fibers within a matrix of the skin elements.

According to another embodiment of the invention, the plurality of skin layers together forms the first skin element such that the main fiber direction of the first skin element is defined by the corresponding fiber direction which is present in the majority of skin layers. In an example, the main fiber direction may be the maximum stiffness direction of the first skin element.

This means that the direction of the fibers which constitutes the majority, i.e. the direction in which most of the fibers of the skin element are arranged, represents the main fiber direction.

It may also be possible that the main fiber direction of the first skin element is defined by an average value of the corresponding fiber directions of the plurality of skin layers.

According to another embodiment of the invention, a first number of skin layers of the plurality of skin layers has a first fiber direction and a second number of skin layers of the plurality of skin layers has a second fiber direction. An angle +θ between the first fiber direction and the main extension direction of the wing segment is substantially between 0° and 90°, i.e. different from 0° and different from 90°. An angle -θ between the second fiber direction and the main extension direction of the wing segment is substantially between 0° and -90°, i.e. different from 0° and different from 90°. The second number of skin layers comprises more skin layers than the first number of skin layers such that an unbalanced skin laminate is provided.

Furthermore, a third number of skin layers of the plurality of skin layers has a third fiber direction and a fourth number of skin layers of the plurality of skin layers has a fourth fiber direction, wherein the third fiber direction is parallel to the main extension direction of the wing segment and the fourth fiber direction is perpendicular to the main extension direction of the wing segment.

In this manner, an unbalanced skin laminate. i.e. anisotropic material characteristics of the skin element, can be provided. For example, the second number of skin layers comprises four more skin layers than the first number of skin layers.

In an example, the angle +θ between the first fiber direction and the main extension direction of the wing segment amounts to about +45°. In this case, the angle -θ between the second fiber direction and the main extension direction of the wing segment amounts to about -45°. Further in this case, the second number of skin layers comprises ten skin layers and the first number of skin layers comprises six skin layers. In particular, six skin layers have a fiber direction which is angled 45° with respect to the main extension direction of the wing segment and ten skin layers have a fiber direction which is angled -45° with respect to the main extension direction of the wing segment. In the same example, the third number of skin layers comprises 15 skin layers and the fourth number of skin layers comprises zero skin layers. In particular, 15 skin layers have a fiber direction which is parallel to the main extension direction of the wing segment and zero skin layers have a fiber direction which is angled 90° with respect to the main extension direction of the wing segment. This example may refer to the first skin element which represents at least a part of an upper cover of the wing segment.

A second skin element which may represent at least a part of a lower cover of the wing segment may have a completely different composition of the skin layers in the second skin element. As an example, the following tables show both for the upper cover (UC), e.g. the first skin element, and for the lower cover (LC), e.g. the second skin element, the number of layers which have a 0°-fiber direction, the number of layers which have a 45°-fiber direction, the number of layers which have a -45°-fiber direction and the number of layers which have a 90°-fiber direction. Furthermore, the overall number of layers in each skin element is shown in the right column. The tables show two different examples for the arrangements of the fiber directions in the skin layers:

| **Cover** | **n0** | **n45n** | **n-45** | **n90** | **n** |
|---|---|---|---|---|---|
| **UC** | 15 | 8 | 8 | 4 | 35 |
| | 23 | 6 | 6 | 4 | 39 |
| **LC** | 13 | 6 | 6 | 4 | 29 |

| **Cover** | **n0** | **n45** | **n-45** | **n90** | **n** |
|---|---|---|---|---|---|
| **UC** | 15 | 6 | 10 | 0 | 31 |
| | 23 | 4 | 8 | 0 | 35 |
| **LC** | 13 | 8 | 4 | 0 | 25 |

According to another embodiment of the invention, the control unit is configured for controlling the deformation of the first skin element by actively or passively inducing a force or stress into the first skin element.

For example, the force may be a tensile or compressive force. It is possible that tensile or compressive forces are introduced into the first skin element and/or into the second skin element as a transverse or chord-wise forces acting substantially perpendicular to the main extension direction of the wing segment. However, other force introduction directions may be possible. In the context of the present invention, the chord-wise force may also be referred to as transverse force. The chord may be defined as the extension of the wing segment or rib element parallel to the longitudinal axis of the fuselage or as the extension direction of the rib element between the trailing edge and the leading edge of the wing segment. However, the chord may also be defined as the direction perpendicular to the main extension direction of the wing segment.

According to another embodiment of the invention, the control unit is configured for controlling the deformation of the first skin element by means of a stiffening element within the wing segment. This may provide for a passive control of the twist of the wing segment.

The stiffening element may constrain either a transverse expansion or a transverse contraction of the first skin element that occur as a result of bending of the wing segment. By constraining a transverse expansion of the skin element, an additional transverse compressive force is established in the skin element. Similarly, by constraining a transverse contraction of the skin element, an additional transverse tensile force is established in the skin element. The direction of the additional loading generated in the skins may depend on the bending direction of the wing segment. For example, an additional transverse compressive force is generated in the upper skin of the wing segment for an up-bending of the wing segment, while an additional transverse tension force is generated in the lower skin of the wing segment. The additional transverse force in the upper and lower skins creates a shear deformation of the skin elements which twists the wing segment. The amount of twist generated and also the direction of the twist may depend on the amount of bending and on direction of bending. This mechanism for control of wing twist may be a passive control where the stiffening element interacts with the wing bending to create an additional twist of the wing segment. Both the magnitude and the direction of the twist may be altered by designing an orthotropic behavior of the first skin element.

Additionally or alternatively, the control unit comprises an actuation unit or an actuation element, wherein the control unit is configured for actively controlling the deformation of the first skin element by controlling the actuation unit or the actuation element within the wing segment. This may provide for an active control of the twist of the wing segment.

The actuation unit may introduce an either transverse tensile or compressive force into the first skin element. The additional transverse force in the first skin element creates a shear deformation of the skin element, which twists the wing segment. The amount of twist generated and also the direction of the twist may depend on the amount of force introduced by the actuation unit and on its direction in which the actuation unit introduces the force into the skin element. This mechanism for control of wing twist may be an active control with the actuation element providing a direct means for controlling wing twist.

For both the passive control and the active control an additional transverse force is introduced into the first skin element that, via the anisotropic properties of the skin material, results in a shear deformation of the first skin element which in turn results in a twist of the wing segment. In particular, if two skin elements are present at the wing segment, the control unit may for example be configured for simultaneously controlling the deformation of both the first skin element, for example the top cover, and the second skin element, for example the bottom cover, by means of a single stiffening element or a single actuation unit within the wing segment. If the two skins are designed having opposite unbalanced skin laminates, the force applied by the control unit results in opposite shear deformations of the first skin element and of the second skin element. In this configuration, the defined shearing of the skin elements results in a controlled twist of the wing segment.

In an example, the loads generated and the resulting shear deformations within the first skin element and the second skin element can be independently controlled by the control unit. For example, the control unit may control a transverse load or force introduction into the skin elements. However, other directions of load introduction may be possible.

There may be a system inherent twist of the wing segment, for example as a result of the basic wing design, i.e. a twist of the airfoil relative to the airstream occurs when a swept wing is bending, wherein the inherent twist can be increased or reduced by a passive control introducing stiffening elements that interacts with the wing bending to create an additional twist of the wing segment. For such wing behavior, the higher the bending of the wing segment relative to the main extension direction, the higher the system inherent wing twist. By using the stiffening elements that may control the transverse expansion and/or contraction of the skin elements, the magnitude of the twist can be either reduced or increased. In particular, the control unit may counteract the twist of the wing segment or it can strengthen and intensify the twist of the wing segment.

According to another embodiment of the invention, the control unit comprises at least one stiffening element which is arranged at the rib element such that a predetermined deformation of the rib element is generated in order to adjust the twist of the wing segment. Additionally or alternatively, the control unit comprises at least one actuation unit for adjusting a predetermined deformation of the rib element in order to adjust the twist of the wing segment.

In this example, forces, in particular transverse or transverse forces within the first skin element and a possible second skin element can be influenced by controlling the stiffness of the rib elements. For example, the stiffening elements can be attached to the rib elements. The stiffening elements of the rib elements may further be controlled by the actuation unit such that a predetermined transverse force is introduced into the skin elements. If the skin elements have unbalanced laminate properties, this may be used to twist the wing.

According to another embodiment of the invention, the wing segment further comprises a second skin element comprising a material having anisotropic material characteristics. The second skin element is attached to the rib element opposite to the first skin element. The features and characteristics described with reference to the first skin element also apply for the second skin element.

The second skin element may be at least a part of the lower cover of the wing segment or the wing. The rib element may be fixedly attached to the fist skin element as well as to the second skin element such that a relative movement of the first and second skin element is constrained by the stiffness of the rib element.

As described above, two mechanisms are provided, i.e. a passive control of the wing twist and an active control of the wing twist. The two mechanisms may be used to create additional control mechanisms for the adjustment of cruise twist. For example, additional stiffening elements and/or actuation units may be implemented into the rib elements to allow a separate control of the shear deformation of the skin elements, e.g. in the first and second skin elements, and also of the torsion moment generated by the rib elements restraining the shear deformation of the skin elements. Via the control unit, it is thus possible to control, for example, a so called "jig-shape twist", a "jig-to-cruise twist" and a "cruise angle of attack". The "jig-shape twist" may be defined as the shape in which the wing segment is built and represents a configuration of the wing segment in an unloaded state. The "cruise-shape twist" may be defined as the wing segment's deflected shape during a cruise flight condition in which the wing segment is loaded, i.e. bended. The "cruise angle of attack" may represent the actual angle of incidence of the wing segment with respect to the flow direction of the oncoming air.

The control of wing twist can be achieved by horizontal stiffening elements and/or actuation units, e.g. actuators. A horizontal orientation of such stiffeners or actuators allows an independent control of the transverse or chord-wise forces in the skin elements contributing to unbalanced skin laminate shear deformations which are responsible for the global wing twist. The transverse forces in the skin elements may be controlled either by constraining transverse skin poisons ratio expansion or contraction effects during wing segment bending, using additional horizontal stiffeners, or by introducing additional transverse forces into the skin elements by either a static pre-tension or pre-compression or a variable tension or compression of the rib elements.

Adding further horizontal and straight stiffeners into the rib elements may increase the level of transverse skin loads generated in the skin elements from poisons ratio effects during wing segment bending. The increased transverse skin loads may, via the unbalanced skin laminate's extension and shear properties, create further skin shear deformations that directly contribute to an increased wing twist. The net effect is a changed bending and torsion coupling of the component affecting its "jig-to-cruise twist". This effect is a passive effect.

Introducing a static pre-tension or pre-compression into the added horizontal stiffeners, directly change transverse loading in the skin elements. The additional transverse forces in the skin elements may, via the anisotropic properties of the skin material create an additional shear deformation of the skin, providing a direct change of wing segment twist. The net effect is a discrete change of wing "jig-shape twist".

Introducing a variable tension or compression loading into the rib element via a horizontal actuator directly changes the transverse forces in the skin element with similar effects on wing segment twist as described above. The net effect is, if applied during flight, a variable adjustment of wing cruise twist and therefore the angle of attack. This effect may be imagined as an active morphing effect.

The control of wing twist can be achieved by diagonal rib stiffening elements and/or actuation units, e.g. actuators. A diagonal orientation of stiffeners and/or actuators allows a direct control of how skin shear motions generated by the unbalanced skin laminate's extension and shear coupling properties are translated into global component level twist. The torsion moment which twists the wing segment when loaded in bending is generated by the rib element restraining the opposite shearing motion of the first and second skin elements. This is due to the unbalanced skin laminates combined with the extension and shear coupling when the first and second skin elements are loaded in tension and compression states during wing segment bending. The torsion moment generated, and the resulting twist, may be a result of an elastic equilibrium state established between the skin elements, being forced to shear, and the rib elements preventing their motion. The behaviour is asymptotic with a maximum torsion moment for infinitely stiff ribs.

Adding diagonal stiffeners to the rib elements may increase equilibrium shear forces generated between the skin elements and rib elements, increasing the torsion moments and component twist. The net effect is an increased bending and torsion coupling affecting "jig-to-cruise twist" and therefore the cruise angle of attack. This effect is a passive effect.

Introducing a static pre-tension or pre-compression or a variable tension or compression load by an actuator into the added diagonal stiffeners, may provide an addition leaver to control global wing deflection behaviour. If a significant shearing of the rib element is introduced, also a significant shearing of the first and second skin elements may be achieved. A forced shearing of the first and second skin elements may directly trigger extension and shear coupling effects in the unbalanced skin laminates, creating spanwise tension and compression strains that lead to overall global bending effect.

According to an aspect of the present invention, an aircraft comprising the described inventive wing segment is provided. The wing segment may be integrated into a wing, a winglet, a horizontal or vertical tail plane or another component of the aircraft.

The inventive wing segment or the inventive aircraft provides for an adjustment of wing bending and torsion characteristics of a swept wing with unbalanced skin laminates. In particular, the bending and torsion characteristics may be affected by changing wing rib stiffness, especially by changing the wing rib chord-wise stiffness.

This can be used to change "jig-shape twist", for example via pre-spanning, and to change "jig-to-cruise twist", for example via additional stiffness. Furthermore, a morphing wing capability can be created via a variable pre-spanning effect. Additional chord-wise stiffening elements and/or actuators may be added into the wing rib elements but may also be spanned between the wing spar elements or stringer elements. Adding a chord-wise pre-span capability into wing rib elements or between wing spars may be used to correct an unfavorable "jig-shape twist" to improve aerodynamics of the aircraft. Introducing additional chord-wise stiffness into wing rib elements or between wing spars may be used to correct a non-optimum "jig-to-cruise twist" and recover aerodynamic performance post entry into service.

The described control unit, in particular the stiffening elements and the actuators may be developed as a performance enhancement kit that allows tailoring wing stiffness characteristics to airline specific mission requirements. Adding a chord-wise actuation capability into wing rib elements or between spars or stringers may be developed to allow a continuous adjustment of wing twist and therefore the angle of attack of a wing segment during cruise. For example, these capabilities may be developed as a performance enhancement kit or for a new aircraft development.

The inventive wing segment involves introducing additional stiffening and/or actuation mechanisms into the wing rib elements or between wing spars of the wing segment in order to control transverse skin forces and thereby manage the shears deformations of the skin generated by the unbalanced skin laminates which are responsible for the global wing twist.

In general, the invention provides the capability to allow correction of deflected wing shape twist for an already designed aircraft to recover aerodynamic performance from a non-optimum "jig shape". Further, the invention provides the capability to allow tailoring of wing bending/torsion stiffness characteristics to the specific mission requirements of an airline. Further, the invention provides the capability to allow a continuous adjustment of wing twist during flight and allowing to maintain an optimum aerodynamics during the entire mission.

### Brief description of the drawings

- Fig. 1: schematically shows an aircraft having a wing segment according to an exemplary embodiment of the invention.
- Fig. 2: schematically shows a cross-section through a wing segment according to an exemplary embodiment of the invention.
- Fig. 3A: schematically shows a first skin element, e.g. a part of an upper cover of a wing segment and a second skin element, e.g. a part of a lower cover of a wing segment according to an exemplary embodiment of the invention.
- Fig. 3B: schematically shows a first or second skin element according to an exemplary embodiment of the invention.
- Fig. 4: schematically shows cross-sections through a wing segment comparing a jig-shape twist and a cruise shape twist according to an exemplary embodiment of the invention.
- Fig. 5: schematically shows a relative movement of an upper cover with respect to a lower cover of the wing segment according to an exemplary embodiment of the invention.
- Fig. 6: shows a numerical model of a rib element according to an exemplary embodiment of the invention.
- Fig. 7A: shows an arrangement of rib elements in a loaded aircraft wing with balanced skin laminates according to an exemplary embodiment of the invention.
- Fig. 7B: shows an arrangement of rib elements in a loaded aircraft wing with unbalanced skin laminates according to an exemplary embodiment of the invention.
- Fig.8A: schematically shows a control unit for passively controlling a deformation of a rib element according to an exemplary embodiment of the invention.
- Fig.8B: schematically shows a control unit for passively controlling a deformation of a rib element according to another exemplary embodiment of the invention.
- Fig.9A: schematically shows a control unit for actively controlling a deformation of a rib element according to an exemplary embodiment of the invention.
- Fig.9B: schematically shows a control unit for actively controlling a deformation of a rib element according to another exemplary embodiment of the invention.
- Fig. 10A: schematically shows a top view and a bottom view of a wing segment according to an exemplary embodiment of the invention.
- Fig. 10B: schematically shows a top view and a bottom view of a wing segment according to another exemplary embodiment of the invention.
- Fig. 10C: schematically shows a top view and a bottom view of a wing segment according to another exemplary embodiment of the invention.
- Fig. 10D: schematically shows a top view and a bottom view of a wing segment according to another exemplary embodiment of the invention.
- Fig. 11A: shows a wing segment which is loaded in up bending according to an exemplary embodiment of the invention.
- Fig. 11B: shows a wing segment which is loaded in up bending according to another exemplary embodiment of the invention.

### Detailed description of the drawings

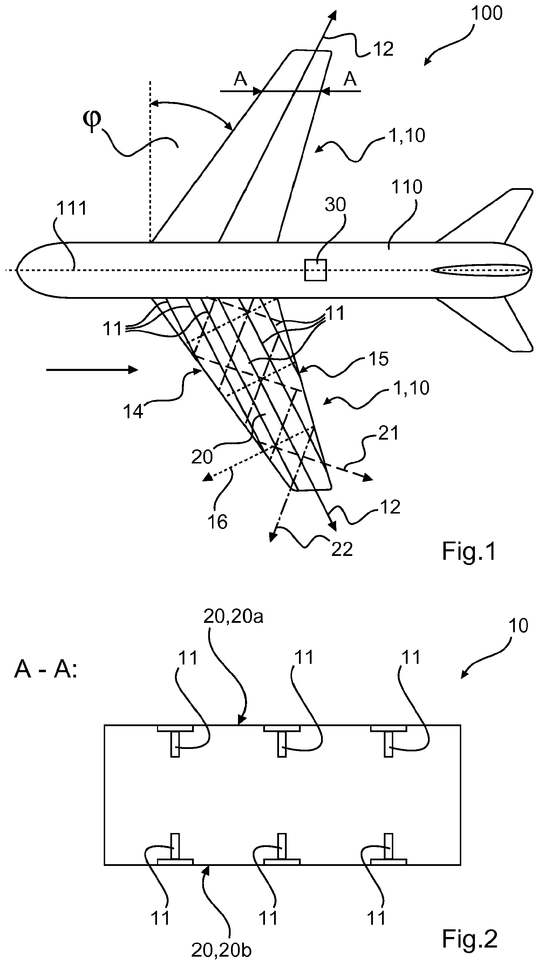

Fig. 1 shows an aircraft 100 having a wing 1 with a wing segment 10. The wing 1 may comprise several wing segments 10. The wing segment 10 comprises stringer elements 11 extending along a main extension direction 12 of the wing segment 10, a rib element attached to at least one stringer element 11 and extending between a leading edge 14 and a trailing edge 15 of the wing segment 10. For reasons of clarity, the rib elements are not shown in Fig. 1. The wing segment 10 further comprises a first skin element 20 comprising a material having anisotropic material characteristics. The first skin element 20 is attached to the rib element in such a way that a deformation of the first skin element 20 results in a twist of the wing segment 10 with respect to the main extension direction 12 of the wing segment 10. It is noted that the stringer elements 11 are depicted in Fig. 1 for a better understanding although the skin element 20 is usually not transparent and the stringer elements should therefore be hidden by the skin element 20. The wing segment 10 comprises a control unit 30 for controlling a deformation of the first skin element 20 in order to adjust the twist 40 of the wing segment 10 such that a predetermined twist 40 of the wing segment 10 is achievable.

In the example described in Fig. 1, the control unit 30 is arranged at or within a fuselage 110 of the aircraft 100. The aircraft fuselage 110 extends along a longitudinal axis 111 of the aircraft 100. The main extension direction 12 of the wing segment 10 and the longitudinal axis 111 of the aircraft fuselage 110 enclose an angle which is defined as the sweep angle ϕ of the aircraft wing 1 or wing segment 10.

Fig. 1 further shows the different fiber directions 12, 16, 21, 22 of different layers of the first skin element 20. The first fiber direction 21 is angled 45° with respect to the main extension direction 12 of the wing segment 10. The first fiber direction 21 may correspond to a first number of layers of the skin element 20. The second fiber direction 22 is angled -45° with respect to the main extension direction 12 of the wing segment 10. The second fiber direction 22 may correspond to a second number of layers of the skin element 20. The wing segment 10 may comprise a third number of layers which has a third fiber direction 12, e.g. a 0°-fiber direction, which is parallel to the main extension direction 12 of the wing segment 10. The wing segment 10 may comprise a fourth number of layers which has a fourth fiber direction 16, e.g. a 90°-fiber direction, which is perpendicular to the main extension direction 12 of the wing segment 10.

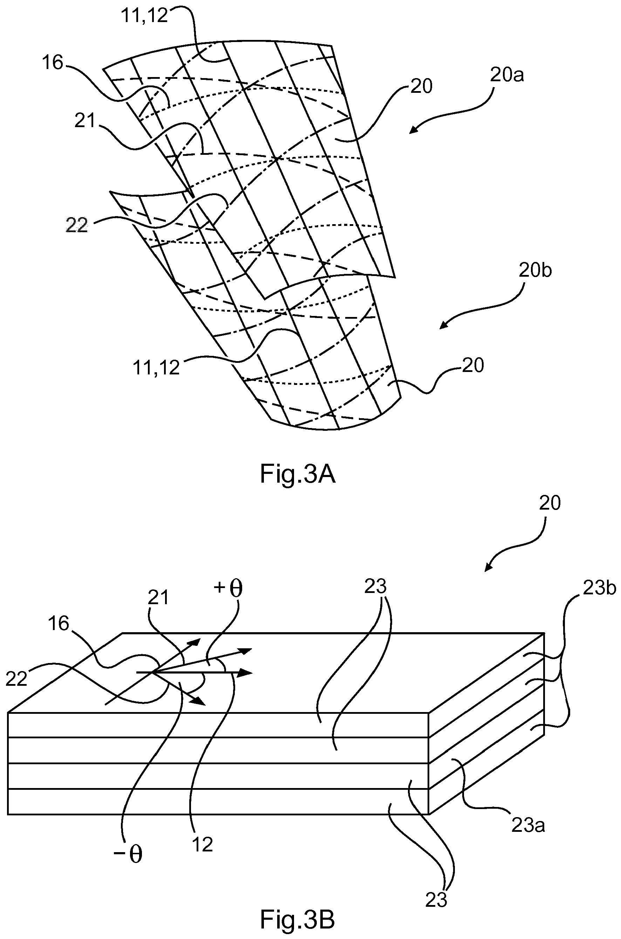

Fig. 2 shows a cross-section A-A through the wing segment 10 of Fig. 1. This is only a schematic view of the wing segment 10 since the wing segment 10 of an aircraft wing usually has a curved surface which is provided by the upper cover 20a, e.g. the first skin element 20a, and the lower cover 20b, e.g. the second skin element 20b as shown in Fig. 3A.

In Fig. 2, it can be recognized that the wing segment 10 comprises stringer elements 11 at each side of the wing segment 10, i.e. at the upper cover 20, 20a which is at least partially formed by the first skin element 20a and at the lower cover 20, 20b which is at least partially formed by the second skin element 20b. Although the examples described with respect to the Figures show wing segment 10 with stringer elements 11, it should be understood that the inventive adjustment of the wing twist by means of the control unit in combination with unbalanced skin laminates also applies to the case in which the wing segment 10 has no stringer elements 10, for example in a sandwich construction of the wing segment 10.

Fig. 3A shows the curved surface of the upper cover 20a and lower cover 20b. Furthermore, Fig. 3A shows the first fiber direction 21 which is angled with respect to the main extension direction 12 of the wing segment 10 in any angle between 0° and 90°, preferably +45°. The first fiber direction 21 may correspond to a first number of layers of the skin element 20. The second fiber direction 22 is angled with respect to the main extension direction 12 of the wing segment 10 in any angle between 0° and -90°, preferably -45°. The second fiber direction 22 may correspond to a second number of layers of the skin element 20.

The wing segment 10 comprises a third number of layers which has a third fiber direction 12 which is parallel to the main extension direction 12 of the wing segment 10 and therefore parallel to the stringer elements 11. The wing segment 10 comprises a fourth number of layers which has a fourth fiber direction 16 which is perpendicular to the main extension direction 12 of the wing segment 10.

Fig. 3B shows a first skin element 20, 20a or a second skin element 20, 20b. The skin element 20 comprises a plurality of skin layers 23. Therefore, the skin element 20 can be imagined as a stack of layers 23 in which the different layers 23 are arranged one on top of the other. In Fig. 3B, an example for possible fiber directions of fibers within the different skin layers 23 are shown by the two-dimensional coordinate system depicted on the top layer 23 of the stack of layers 23. An angle between the first fiber direction 21 and the main extension direction 12 of the wing segment 10 may be between 0° and +90°, for example about 45°. An angle between the second fiber direction 22 and the main extension direction 12 of the wing segment 10 may be between 0° and -90°, for example about -45°. The second number 23b of layers 23 defined by the second fiber direction 22 is greater than the first number 23a of layers 23 defined by the first fiber direction 21. In this manner, an unbalanced skin laminate 20 can be provided.

The third fiber direction 12 may be parallel to the main extension direction 12 of the wing segment 10 such that the third fiber direction 12 may also be defined as 0°-fiber direction. The fourth fiber direction 16 may be perpendicular to the main extension direction 12 of the wing segment 10 such that the fourth fiber direction 16 may also be defined as 90°-fiber direction.

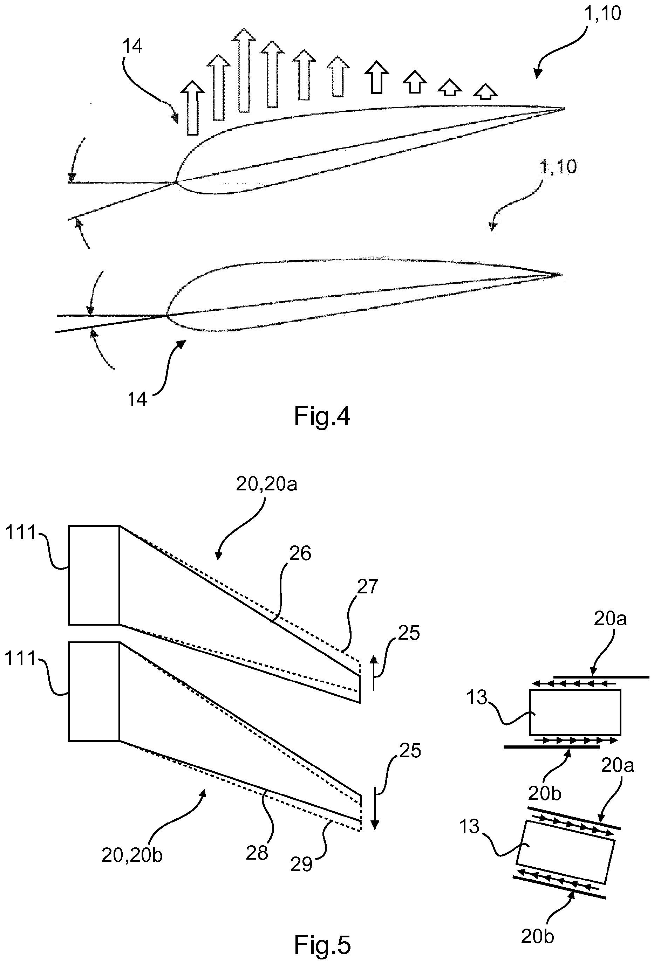

Fig. 4 shows a cross-section through a wing segment 10 for comparing a "jig-shape twist" and a "cruise shape twist". The "jig-shape twist" is defined as the shape in which the wing segment 10 or wing 1 is built and represents a configuration of the wing segment 10 in an unloaded state. The "jig-shape twist" of the wing segment 10 is shown in the lower picture of Fig. 4. The "cruise-shape twist" which is depicted in the upper picture of Fig. 4 is defined as the wing segment's 10 deflected shape during a cruise flight condition in which the wing segment is loaded, i.e. bended. For example, the wing segment 10 is subjected to gravity loads, engine loads and aerodynamic loads. The gravity load is indicated by the lower arrow in Fig. 4 and lift forces are indicated by the upper arrows in Fig. 4.

As can be gathered from Fig. 4, the twist of the wing segment is higher in the loaded state, e.g. during cruise flight, than in the unloaded state, e.g. during ground operation. In particular, during cruise flight, the leading edge of the wing segment 10 twists downward compared to the "jig-shape twist". In other words, the wing segment 10 twists nose down when loaded in bending.

Fig. 5 schematically shows a relative movement of the upper cover 20a with respect to the lower cover 20b of the wing segment 10. The unbalanced skin laminates which are represented by the first skin element 20a and the second skin element 20b are due to shear restrictions enforced by the rib elements 13, which produces a resulting torsion moment that twists the wing segment 10, for example the wing 1, a winglet or a horizontal or vertical tail plane when loaded, e.g. bended. The generated torsion moment is a result of an elastic equilibrium established between the unbalanced skin elements 20 forcing to shear forward and/or aft and the rib elements 13, e.g. the wing box ribs, prevent their motion. If the rib elements 13 have only low shear stiffness, the covers would be allowed to shear freely and would not generate any shear forces at the rib element 13 interfaces and hence no torsion. In contrast, a maximum torsion would be generated for fully rigid rib elements 13.

When using unbalanced skin laminates 20, a direct coupling exists between the rib element sizing and the global deflections of the wing segment 10. Compared to metallic wing designs and composite wing designs with balanced or symmetric skin laminates, a design with unbalanced skin laminates presents additional design opportunities. Changing the rib element stiffness has a significant effect on the wings bending and torsion coupling characteristics. Introducing additional stiffness into the rib elements 13 may, for example, be used to correct or adjust a non-optimum cruise wing angle of attack and thereby improve the aircraft performance. Angle of attack may be understood as the angle between the chord line of the wing's airfoil and the direction of the oncoming air.

Fig. 5 shows that the upper cover 20a, e.g. the first skin element 20, is shifted forward if the upper cover 20a is loaded, i.e. bended. The upper cover 20a is shown in the unloaded state 26 and in the loaded state 27, wherein a loading or bending of the upper cover 20a causes a shift forward along the longitudinal axis 111 of the upper cover 20a from the unloaded state 26 to the loaded state 27.

Fig. 5 also shows the that the lower cover 20b, e.g. the second skin element 20, is shifted backwards if the upper cover 20b is loaded, i.e. bended. The lower cover 20b is shown in the unloaded state 28 and in the loaded state 29, wherein a loading or bending of the lower cover 20b causes a shift backwards along the longitudinal axis 111 of the lower cover 20b from the unloaded state 28 to the loaded state 29.

This shifting of the covers 20a, 20b, e.g. skin elements 20, is caused by the specific arrangement of fiber directions 12, 16, 21, 22 in the different layers 23 of the skin elements 20 such that anisotropic characteristics of the skin elements are achieved. The skin elements 20 having such anisotropic material characteristics can be defined as unbalanced skin laminates. Modifying the bending and/or torsion characteristics for a composite wing, winglet and/or a horizontal or vertical tail plane may be achieved by providing such composite skins using unbalanced laminates.

In contrast, balanced/symmetric laminates may comprise laminates with only 0°, ±45° and 90°-fiber directions having the 0°-fibers extending along the main extension direction 12 of the stringer elements 11, wherein the number of skin layers with +45°-fiber direction is equal to the number of skin layers with -45°-fiber direction. With this orientation the 0°-fibers in the skin elements 20 are aligned to the principle loading direction of the skin elements 20 and with an equal amount of +45/-45°-fibers in the skin elements 20. However, using such skin elements 20, wing level bending and torsion coupling effects, in addition to the already existing or system inherent twist effect due to geometrical constraints and the sweep angle, are usually not present.

By allowing an unbalancing of the +45 and -45°-fibers in the skin elements 20, it is possible to introduce extension and shear coupling effects into the top and bottom covers 20a, 20b. Using unbalanced laminates, the top and bottom skin elements 20a, 20b of a composite wing segment 10, wing 1, winglet or a horizontal or vertical tail plane may, as an example, be designed such that the top skin element 20a shears forward during compression loads generated by an up-bend case, whilst the bottom skin 20b simultaneously shears backwards under the tension loads generated by the same up-bend case as shown in Fig. 5. As the two wing elements 20a, 20b are tied together by the wing rib elements 13, the shearing of the top skin element 20a and the bottom skin element 20b of the wing segment 10 is constrained. This means that the skin elements 20a, 20b are pulled back onto the rib elements 13 generating additional shear loads in the interface between the rib elements 13 and the skin elements 20a, 20b. As a net effect, the skin elements 20, 20a, 20b, e.g. the upper cover 20a and the lower cover 20b generate a twisting moment, which twists the wing segment 10, e.g. the wing box, nose down for an up-bend case. The opposite case occurs for a down-bending of the wing 1.

The general principle is illustrated in Figure 5, which shows the shearing of the covers 20a, 20b in both plan view and side view.

Furthermore, Fig. 5 shows a load introduction via the rib element 13 into the skin elements 20a, 20b which is the result of the relative movement of the first skin element 20a, e.g. the upper cover 20a, and the second skin element 20b, e.g. the lower cover 20b, combined with the fixed attachment between the skin elements 20a, 20b and the rib element 13 preventing a relative movement between these components.

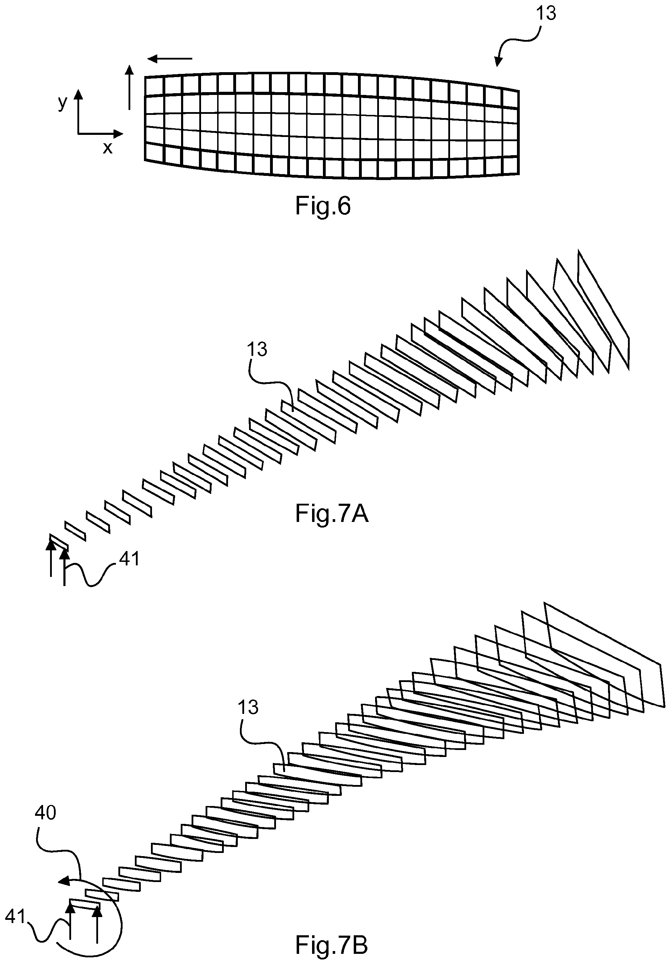

Fig. 6 shows a numerical model of a deformation of a rib element 13 as a result of the shear forces generated by the relative shifting of the upper or top cover 20a and lower or bottom cover 20b not shown in Fig. 6.

Fig. 7A shows the arrangement of rib elements 13 in a wing 1 or wing segment 10 during an up-bending case, which usually occurs during cruise flight. Bending forces 41 apply at the wing 1 or wing segment 10. The shown up-bending case refers to balanced skin laminates which are not shown in Fig. 7A.

Fig. 7B shows the arrangement of rib elements 13 in a wing 1 or wing segment 10 during an up-bending case, which usually occurs during cruise flight. The same bending forces 41 as in Fig. 7A apply at the wing 1 or wing segment 10. The shown up-bending case refers to unbalanced skin laminates which are not shown in Fig. 7A.

It is recognizable from Figs. 7A and 7B that, using unbalanced skin laminates attached to the rib elements 13, cause an additional twist 40 on the wing 1 or wing segment 10. The unbalanced skin laminates, e.g. the skin elements having a different number of layers, for example, with +45°fiber direction 21 and layers with -45°-fiber direction 22, cause this additional twist 40 of the wing 1 or wing segment 10.

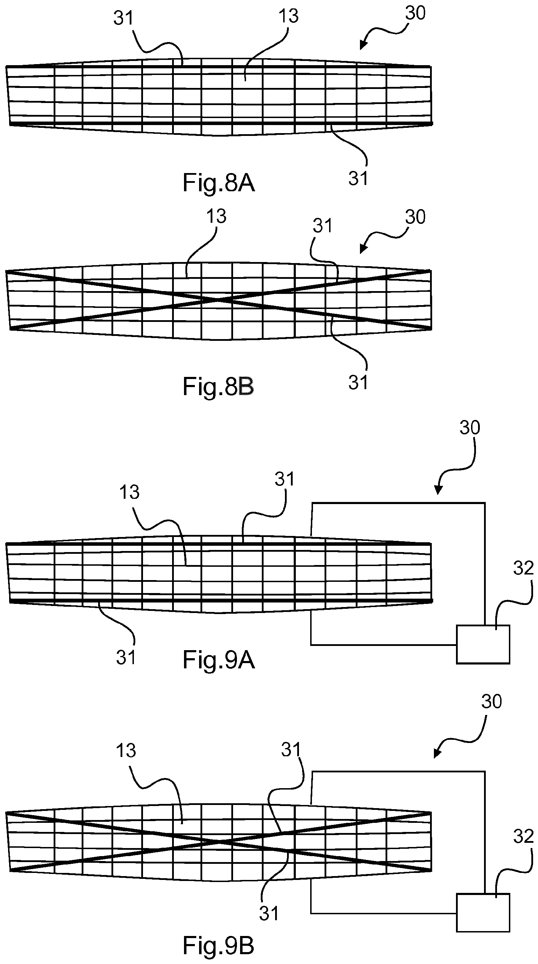

Fig. 8A shows a passive control of the wing twist 40. In particular, Fig. 8A shows a rib element 13 having a control unit 30 which is configured for controlling the deformation of the rib element 13 by passively adjusting the introduction of a predetermined force into the rib element 13 such that in turn a predetermined compression or tension load can be introduced into the skin elements 20. The control unit 30 comprises at least one stiffening element 31, preferably two stiffening elements 31 which are arranged at the rib element 13 such that the deformation of the rib element 13 can be controlled in order to adjust the compression or tension load in the skin elements 20 and therefore the twist 40 of the wing segment 10. The stiffening elements 31 and the rib element 13 may be separate parts which are attached to each other. The stiffening elements 31 may be parallel to each other and extend along the lateral surfaces of the rib element 13. In particular, the stiffening elements 31 have a straight design like a beam.

By adding a stiffening element 31, the amount of chord-wise or transverse loading that is generated in the skin elements 20 during bending can be changed. This directly affects the shear deformation of the skin elements 20 and the twist of the wing segment 10 when it is bending. The passive control can also comprise a fixed pre-spanning of the stiffening element 31, which changes the twist on the wing segment 10 during ground operation. In this manner, it is possible to correct an already designed wing 1 or wing segment 10 that has an unfavorable twist. However, it is also possible to tune a wing 1 or wing segment 10 for different mission requirements.

Fig. 8B shows another example for a passive control of the wing twist 40. The stiffening elements 31 are arranged diagonally with respect to the rib element 13. This means that the stiffening elements 31 cross each other in a central portion of the rib element 13 which is substantially formed as a rectangle with outwardly curved edges as shown in Fig. 8B. The outwardly curved edges may align to the curved contours of the skin elements 20a, 20b.

Fig. 9A shows an example for an active control of the wing twist 40. In particular, Fig. 9A shows a rib element 13 having a control unit 30. The control unit 30 comprises an actuation unit 32 and stiffening elements 31 which are connected to the actuation unit 32 by electrical or signal lines. The control unit 30 is configured for controlling the deformation of the rib element 13 by actively adjusting the introduction of a force into the rib element 13 via the stiffening elements 31 such that in turn a predetermined compression or tension load can be introduced into the skin elements 20. The control unit 30 comprises at least one stiffening element 31, preferably two stiffening elements 31 which are arranged at the rib element 13 such that a predetermined deformation of the rib element 13 is generated in order to adjust the compression or tension load in the skin elements 20 and therefore to adjust the twist 40 of the wing segment 10. The stiffening elements 31 and the rib element 13 may be separate parts which are attached to each other. The stiffening elements 31 may be parallel to each other and extend along the lateral surfaces of the rib element 13. In particular, the stiffening elements 31 have a straight design like a beam. The stiffening elements 31 may, for example, be mechanically, hydraulically or magnetically actuated.

Fig. 9B shows another example for an active control of the wing twist 40. In particular, Fig. 9B shows a rib element 13 having a control unit 30. The control unit 30 comprises an actuation unit 32 and stiffening elements 31 which are connected to the actuation unit 32 by electrical or signal lines. The stiffening elements 31 and the rib element 13 may be separate parts which are attached to each other. In particular, the stiffening elements 31 have a straight design like a beam. The stiffening elements 31 may, for example, be mechanically, hydraulically or magnetically actuated. The stiffening elements 31 are arranged diagonally with respect to the rib element 13. This means that the stiffening elements 31 cross each other in a central portion of the rib element 13 which is substantially formed as a rectangle with outwardly curved edges as shown in Fig. 8B. The outwardly curved edges may align to the curved contours of the skin elements 20a, 20b.

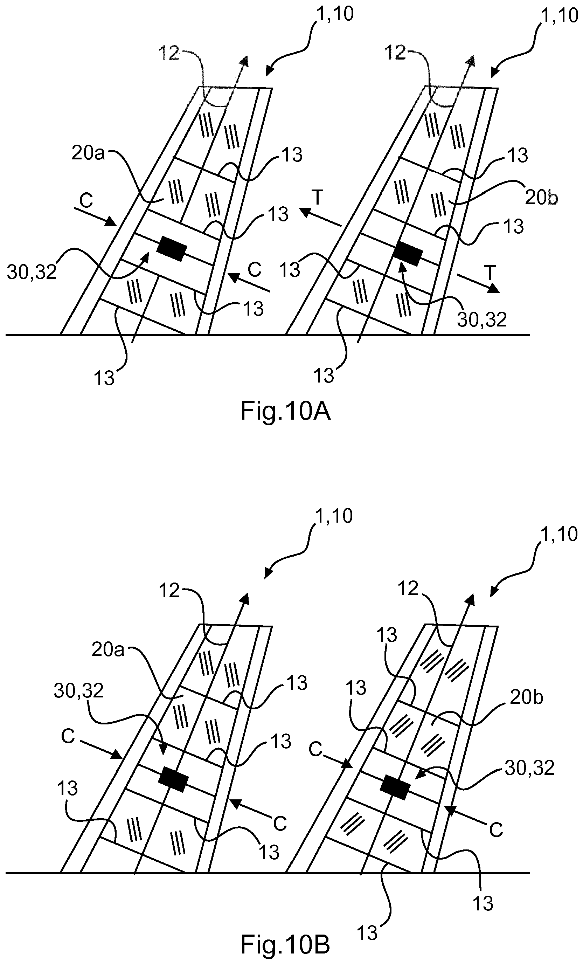

Figures 10A to 10D illustrate top views and bottom views of the inventive wing 1 or wing segment 10. In particular, these Figures show a possible combination of a control unit 30, e.g. an actuation unit 32 and a specified laminate definition, for example a specified main fiber direction or main stiffness direction, in the first skin element 20a, e.g. the top cover, and within the second skin element 20b, e.g. within the lower cover. The main fiber direction which may also be referred to as the main stiffness direction of the skin elements 20a, 20b is shown as three parallel lines in Figures 10A to 10D.

Fig. 10A shows a combination in which an actuation unit 32 introduces a transverse compression C into the top cover 20a whilst at the same time another actuation unit 32 introduces a transverse tension T into the bottom cover 20b. Actuation units 32 are aligned perpendicular to the main extension direction 12 of the wing segment 10 and therefore parallel to the rib elements 13. The introduction of tension and compression into the top and bottom covers 20a, 20b may generally be carried out by the same or separated actuation units 32. In case of separate actuation units 32, each actuation unit 32 may introduce the tension or compression independently of the other actuation unit 32.

In the shown configuration, to generate a twist, the top cover 20a and the bottom cover 20b comprise a similar direction of extension and shear coupling or of the main stiffness direction of the covers 20a, 20b as indicated in the Figures. The extension and shear coupling may be dependent on the fiber directions within the different skin layers 23 i.e. or it may depend on the main fiber direction of the skin elements. The opposite forces acting on the top cover 20a and bottom cover 20b create a differential shear of the two skin elements 20a, 20b and will twist the wing segment 20. As the extension and shear coupling is a directional property, it exists for a loading direction orthogonal to the wing main extension direction 12.

Fig. 10B shows a combination where actuation units 32 act in a similar direction, hence introducing either tension T or compression C into the top cover 20a and bottom cover 20b. Actuation units 32 are again aligned perpendicular to the main extension direction 12 of the wing segment 10 and therefore parallel to rib elements 13. In this configuration, to generate a twist, the top cover 20a and the bottom cover 20b comprise an opposite extension and shear coupling or an opposite main stiffness direction of the covers 20a, 20b as indicated by three parallel lines in the Figures. The similar direction of the actuation units 32 in combination with the opposite effect of unbalancing the skin elements 20a, 20b creates a differential shear of the two skin laminates 20a, 20b and will twist the wing segment 10.

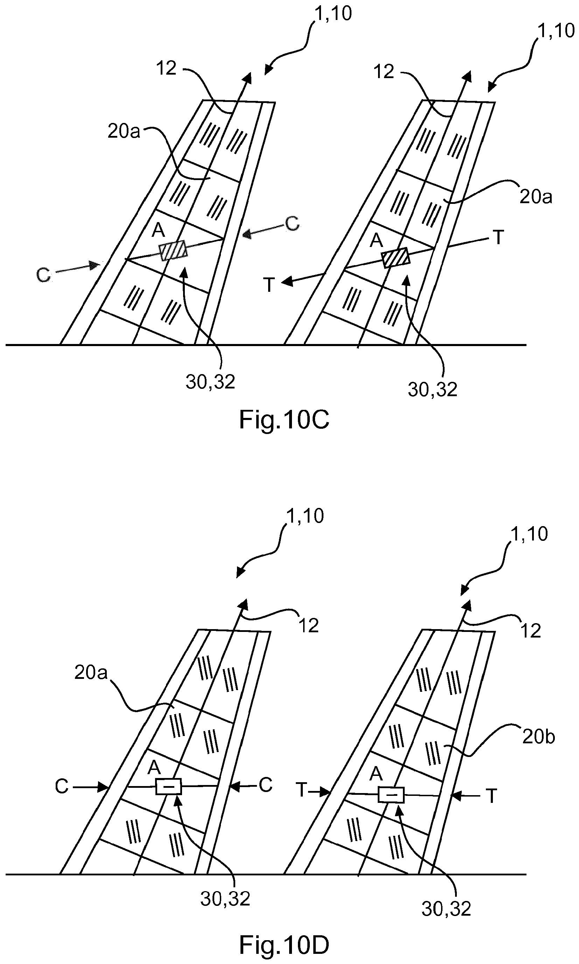

Fig. 10C shows a combination where an actuation unit 32 introduces a transverse compression C into the top cover 20a whilst at the same time another actuation unit 32 introduces a transverse tension T into the bottom cover 20b. The actuators of the actuation units 32 are aligned diagonally across the rib bay, i.e. diagonally in the space between the rib elements 13. For example, the actuation unit extends from a front end of a rib element 13 to a rear end of a neighbouring rib element 13. This means that the actuation units 32 extend parallel to the longitudinal direction of the fuselage of the aircraft. In this configuration, to generate a twist, skin laminates showing no extension shear along and perpendicular to the main extension direction of the wing segment 10 are used. In this case, the laminate is loaded at an angle to the main extension direction 12. This creates a differential shear of the two skins and twist the wing. It should be understood that the embodiments described herein may also be combined with metallic skin elements, e.g. metallic top and bottom covers.

Fig. 10D shows a combination where an actuation unit 32 introduces a transverse compression C into the top cover 20a whilst at the same time another actuation unit 32 introduces a transverse tension T into the bottom cover 20b. The actuators of the actuation units 32 are aligned diagonally across the rib bay, i.e. in the space between the rib elements 13. In particular, the actuation units 32 extend parallel to the longitudinal axis of the aircraft fuselage or in the flight direction. In this configuration, to generate a twist, the top cover 20a and the bottom cover 20b comprise a similar direction of extension and shear coupling as indicated by three parallel lines in the Figures. The opposite forces acting on the top cover 20a and bottom cover 20b create a differential shear of the two skin elements 20a, 20b and will twist the wing segment 20.

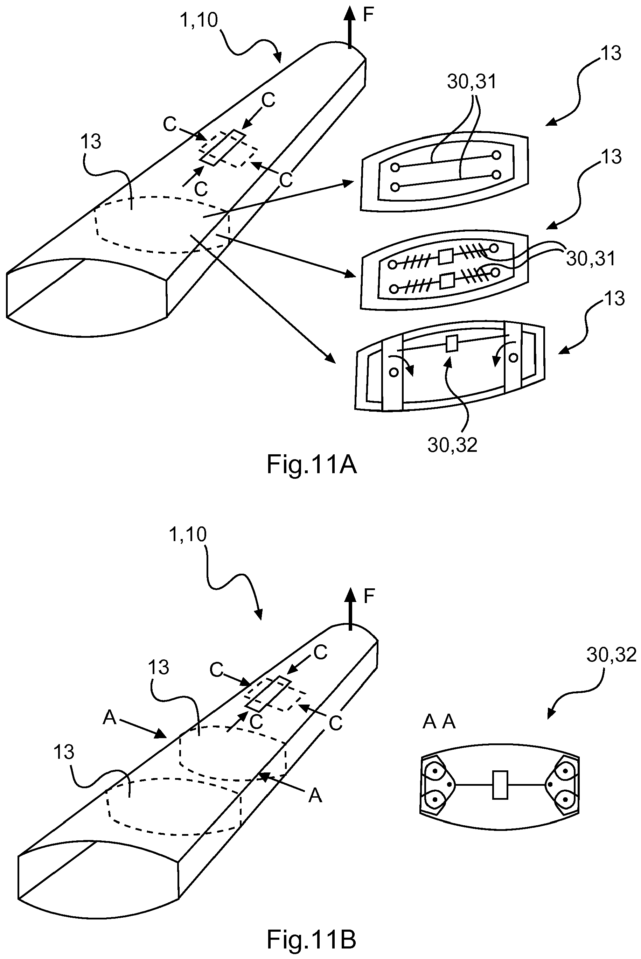

Fig. 11A shows a wing segment 10 or a wing 1 which is loaded in up bending, i.e. by a force F. The material on the top cover 20a is loaded in compression C and expands in a transverse direction. Since material cannot expand freely, a bi-axial compressive state is created. To add an independent control of the wing twist, three different actuation and control mechanisms are possible.

Therefore, Fig. 11A shows three different control units 30. The first example shows a control unit 30 in the form of a stiffener 31 which is attached to the rib element 13. The additional stiffener 31 increases the bi-axial compression C in the top skin element 20a, wherein a larger transverse compression occurs. An opposite effect occurs in the bottom skin 20b. Combining this with a laminate definition as shown in Fig. 10A, a predetermined twist of the wing 1 during flight can be adjusted.

The second example shows the control unit 30 in the form of a stiffener 31, which in contrast to the first example is pre-spanned. In addition to the stiffness effect described above, this allows to further add a static pre-tension or pre-compression into the top cover 20a and/or bottom cover 20b. This may change the twist on the wing segment 10 during ground operation and therefore may also have an influence of the twist and shape of the wing segment during flight. In other words, an unfavorable twist of an already designed wing 1 or wing segment 10 can be corrected or the twist of a wing 1 or wing segment 10 can be adapted for different mission requirements.

The third example shows the control unit 30 having an actuation unit 32 or actuator mechanism attached to the wing rib element 13 to introduce an opposite tension and compression load into the top and bottom. In particular, this makes it possible to introduce a compression C into the upper cover 20a and a tension T into the lower cover 20b or vice versa.

Fig. 11B shows a wing segment 10 or a wing 1 which is loaded in up bending, i.e. by a force F. The material on the top cover 20a is loaded in compression T and expands in a transverse direction. Since the material cannot expand freely, a bi-axial compressive state is created. To add an independent control of the wing twist, an actuator 32 is arranged between rib elements 13 of the wing segment 10. The actuator 32 is connected via two pin/lug connections at the top and at the bottom corners of a front and rear spar within the wing segment 10. This illustrates a case in which the skin forces are not introduced via the rib elements 13 as shown in Fig. 11A.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of protection.

## Claims

1. A wing segment (10) for an aircraft (100), comprising:
a first skin element (20) comprising a material having anisotropic material characteristics;
a rib element (13) arranged between a leading edge (14) and a trailing edge (15) of the wing segment (10);
wherein the first skin element (20) is attached to the rib element (13) in such a way that a deformation of the first skin element (13) results in a twist (40) of the wing segment (10) with respect to a main extension direction (12) of the wing segment (10);
a control unit (30) for controlling a deformation of the first skin element (13) in order to adjust the twist (40) of the wing segment (10) such that a predetermined twist (40) of the wing segment (10) is achievable.

2. The wing segment (10) according to claim 1,
wherein the first skin element (20) comprises a material with a main fiber direction,
wherein the stiffness of the first skin element (20) in the main fiber direction is higher than the stiffness of the skin element (20) in a direction different to the main fiber direction.

3. The wing segment (10) according to claim 2,
wherein the main fiber direction of the first skin element (20) is angled with respect to the main extension direction of the wing segment (10) such that the angle between the main fiber direction of the first skin element (20) and the main extension direction of the wing segment (10) is between 0° and 90°; and/or
wherein the main fiber direction of the first skin element (20) is angled with respect to the main extension direction of the wing segment (10) such that the angle between the main fiber direction of the first skin element (20) and the main extension direction of the wing segment (10) is between 0° and -90°.

4. The wing segment (10) according to any one of the preceding claims,
wherein the first skin element (20) comprises a plurality of skin layers (23), each of the skin layers (23) having a corresponding fiber direction.

5. The wing segment (10) according to claim 4,
wherein the plurality of skin layers (23) together forms the first skin element (20) such that the main fiber direction of the first skin element (20) is defined by the corresponding fiber direction which is present in the majority of skin layers (23).

6. The wing segment (10) according to any one of claims 4 to 5,
wherein a first number (23a) of skin layers (23) of the plurality of skin layers (23) has a first fiber direction (21) and a second number (23b) of skin layers (23) of the plurality of skin layers (23) has a second fiber direction (22);
wherein an angle +θ between the first fiber direction (21) and the main extension direction (12) of the wing segment (10) substantially is between 0° and 90°;
wherein an angle -θ between the second fiber direction (22) and the main extension direction (12) of the wing segment (10) substantially is between 0° and -90°;
wherein the second number (23b) of skin layers (23) comprises more skin layers (23) than the first number (23a) of skin layers (23).

7. The wing segment (10) according to any one of the preceding claims,
wherein the control unit (30) is configured for controlling the deformation of the first skin element (20) by actively or passively inducing a force into the first skin element (20).

8. The wing segment (10) according to claim 7,
wherein the control unit (30) is configured for controlling the deformation of the first skin element (20) by means of a stiffening element within the wing segment; and/or
wherein the control unit (30) is configured for controlling the deformation of the first skin element (20) by actively controlling an actuation unit within the wing segment (20).

9. The wing segment (10) according to any one of the preceding claims,
wherein the control unit (30) comprises at least one stiffening element (31) which is arranged at the rib element (13) such that a predetermined deformation of the rib element (13) is generated in order to adjust the twist (40) of the wing segment (10); and/or
wherein the control unit (30) comprises at least one actuation unit (32) for adjusting a predetermined deformation of the rib element (13) in order to adjust the twist (40) of the wing segment (10).

10. The wing segment (10) according to any one of the preceding claims, comprising:
a second skin element (20, 20b) comprising a material having anisotropic material characteristics;
wherein the second skin element (20, 20b) is attached to the rib element (13) opposite to the first skin element (20, 20a).

11. An aircraft (100), comprising a wing segment (10) according to any one of the preceding claims.
